# EUROPÄISCHE PATENTSCHRIFT

(11) **EP 0 866 360 B1**
(45) Veröffentlichungstag und Bekanntmachung des Hinweises auf die Patenterteilung: **29.12.2004**
(21) Anmeldenummer: 98103127.1
(22) Anmeldetag: 23.02.1998
(51) Int. Cl.: G03B 21/20, G03B 27/54

(54) **Beleuchtungsanordnung**
Lighting device
Dispositif d'éclairage

(30) Priorität: 20.03.1997 DE 19711599
(43) Veröffentlichungstag der Anmeldung: 23.09.1998
(73) Patentinhaber: Carl Zeiss AG, 73447 Oberkochen (DE)
(72) Erfinder: Hauser, Norbert, 38116 Braunschweig (DE); Brückner, Claus-Peter, 38165 Lehre-Flechtorf (DE); Reinke, Heiko, 38300 Wolfenbüttel (DE)

(56) Entgegenhaltungen:
- EP-A- 0 594 508
- EP-A- 0 767 584
- DE-A- 3 427 592
- DE-A- 3 813 035
- GB-A- 2 083 195
- JP-A- 4 104 583
- US-A- 3 761 170
- US-A- 4 402 038
- US-A- 4 518 233

## Beschreibung

Die Erfindung betrifft eine Beleuchtungseinrichtung nach dem Oberbegriff von Anspruch 1. Eine solche Einrichtung ist aus dem Dokument US-A- 4 518 233 bekannt.

Eine weitere Beleuchtungsanordnung mit einer Hauptlampe und einer Reservelampe ist aus der DE 38 13 035 C2 bekannt, wobei Hauptlampe und Reservelampe auf einem zwischen einer Grundstellung mit beleuchtungsaktiver Hauptlampe und einer Reservestellung mit beleuchtungsaktiver Reservelampe bewegbaren Lampenträger angeordnet sind. Dabei ist der in der DE 38 13 035 C2 beschriebene Lampenträger ein an einer Führungsschiene geführter Schlitten, wobei ein Stellungswechselmechanismus bei Ausfall der Hauptlampe den Lampenträger selbsttätig aus der Grundstellung in die Reservestellung bewegt.

Auch aus der DE 32 18 699 C2 ist eine gattungsgemäße Beleuchtungsanordnung bekannt, bei der ein ebenfalls als Schlitten ausgebildeter Lampenträger mit Hilfe eines Motors aus der Grundstellung in die Reservestellung verschoben wird, wobei der Motor über ein mehrere Zwischenglieder umfassendes Getriebe mit dem Lampenträger gekoppelt ist.

Aufgabe der Erfindung ist es, eine gattungsgemäße Beleuchtungsanordnung bereitzustellen, welche konstruktiv einfach, problemlos bedienbar, zuverlässig und kompakt ist.

Diese Aufgabe wird durch die Merkmale in Anspruch 1 gelöst.

Durch die Schwenkbarkeit des Lampenträgers aus der Grundstellung in die Reservestellung kann bei mechanisch einfachem Aufbau der Beleuchtungsanordnung der für die Bewegung des Lampenträgers freizuhaltende Freiraum im Vergleich zur Linearbewegung eines Schlittens vergleichsweise klein gehalten werden. Ferner kann eine Schwenkbewegung mit einem einfachen und zuverlässigen Stellungswechselmechanismus vergleichsweise kostengünstig erreicht werden, während die in der DE 32 18 699 C2 detailliert beschriebene Beleuchtungsanordnung mit linear verschiebbarem Lampenträger einen vielkomponentigen und platzraubenden Stellungswechselmechanismus aufweist.

Wenn die Lage des Lampenträgers in seiner Grundstellung durch den Stellungswechselmechanismus festgelegt ist, kann auf einen gesonderten Mechanismus verzichtet werden, der in der Grundstellung den Lampenträger und damit auch die Hauptlampe in einer für die Beleuchtung optimierten Lage reproduzierbar hält.

Vorteilhafterweise ist die Lage des Lampenträgers in seiner Reservestellung durch einen Reservestellungs-Rastmechanismus festgelegt, wodurch auch die beleuchtungsaktive Reservelampe stets in einer für die Beleuchtung optimierten Lage angeordnet ist.

Wenn der verschwenkbare Lampenträger und der Stellungswechselmechanismus auf einem Beleuchtungseinschub angeordnet sind, der in die Beleuchtungsanordung ein- und ausfahrbar ist, kann eine defekte Hauptlampe oder/und eine defekte Reservelampe schnell und ohne Schwierigkeiten außerhalb der i.a. ein geschlossenes Gehäuses aufweisenden Beleuchtungsanordnung ausgewechselt werden.

Dabei ist der Beleuchtungseinschub im Gehäuse der Beleuchtungsanordnung zweckmäßigerweise durch einen Einschubrastmechanismus festgelegt, der den Beleuchtungseinschub und damit auch die beleuchtungsaktive Lampe beim Einschieben in das Beleuchtungsanordnungsgehäuse stets in ein und derselben Arbeitsstellung einrasten läßt.

Bei einer weiteren Ausführungsform stellt ein Rückstellelement den Lampenträger beim Ausfahren des Beleuchtungseinschubs aus dem Gehäuse der Beleuchtungsanordnung aus seiner Reservestellung in seine Grundstellung zurück. Dadurch sind für die Herstellung der bevorzugten Betriebsbereitschaft der Hauptlampe keine gesonderten Maßnahmen erforderlich.

Vorteilhafterweise weist der Lampenträger ein in seiner Reservestellung aus der Beleuchtungsanordnung hinausragendes Anzeigeelement auf, welches den Betrieb der Reservelampe und damit die Notwendigkeit anzeigt, die vermutlich defekte Hauptlampe bei Gelegenheit auszutauschen.

Wenn der Stellungswechselmechanismus ein beim Ausfall der Hauptlampe magnetisch stellbares Steuerungselement umfaßt, welches eine den Lampenträger in seine Reservestellung drängende Feder steuert, kann auf einen den Lampenträger verschwenkenden Elektromotor verzichtet werden. Dadurch ist der Stellungswechselmechanismus aber auch besonders einfach und zuverlässig.

Die Fehlerunempfindlichkeit wird noch weiter erhöht, wenn das Steuerungselement über ein Entriegelungselement auch manuell betätigbar ist. Auf diese Weise ist bei fehlerhafter automatischer Erfassung des Beleuchtungszustands oder bei einem defekten Steuerungselementstellmagnet ein auf die Reservelampe gestützter Notbetrieb möglich, der von jedermann unmittelbar eingeleitet werden kann.

Wenn an die Beleuchtungsanordnung ein Lichtleiter ankoppelbar ist, welcher das Licht der beleuchtungsaktiven Lampe zu einer von der Beleuchtungsanordnung entfernten Stelle transportiert, kann die Beleuchtungsanordnung durch ein geschlossenes Gehäuse geschützt sein, welches zudem eine einfache Handhabung der gesamten Beleuchtungsanordnung ermöglicht.

Dabei kann der Lichtleiter an der Beleuchtungsanordnung einrastend ankoppelbar sein, um eine feste, vorgegebene Lagebeziehung zwischen einer Endfläche des Lichtleiters und der beleuchtungsaktiven Lampe herzustellen. Dadurch ist der für die Einkopplung des Beleuchtungslichts in den Lichtleiter optimale Arbeitsabstand zwischen Lampe und Lichtleiter ohne weiteres und zuverlässig reproduzierbar bei jedem neuen Einsatz der Beleuchtungsanordnung erreichbar.

Die Erfindung wird im folgenden anhand der beiliegenden Figuren erläutert.

Es zeigen:
- Figur 1: ein Ausführungsbeispiel der erfindungsgemäßen Beleuchtungsanordnung mit sich in der Grundstellung befindendem Lampenträger und
- Figur 2: das Ausführungsbeispiel von Figur 1 mit in die Reservestellung verschwenktem Lampenträger.

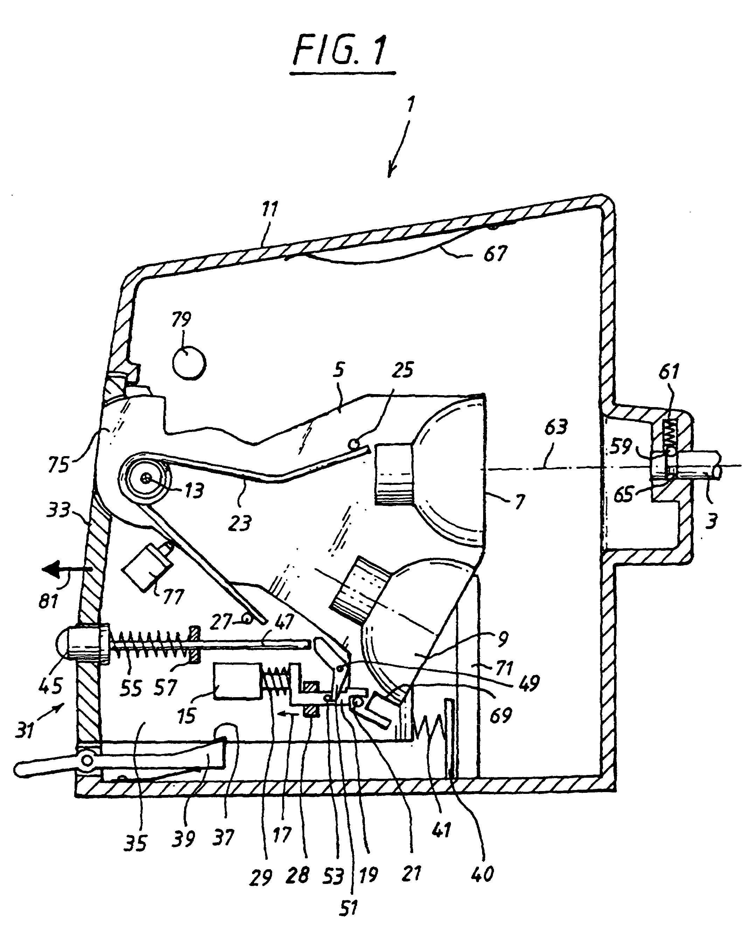

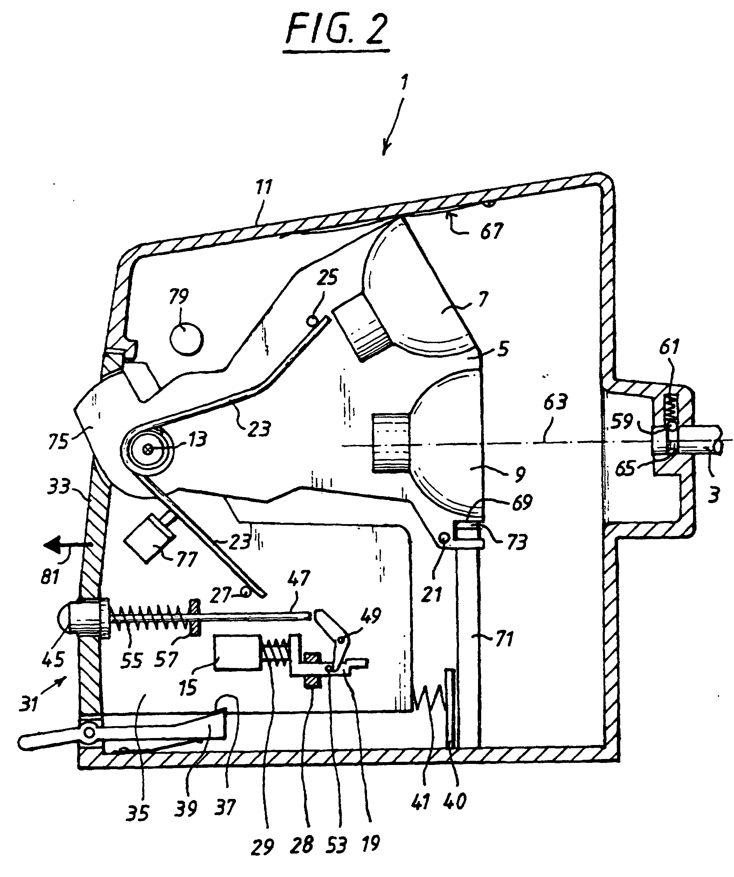

Das in der Figur 1 in einer teilweise geschnittenen Seitenansicht dargestellte Ausführungsbeispiel einer erfindungsgemäßen Beleuchtungsanordnung 1 kann vorteilhafterweise z.B. am Stativ eines Operationsmikroskops angebracht werden, um mit Hilfe eines Faserlichtleiters 3 das Sichtfeld des entsprechenden Operationsmikroskops zu beleuchten. Es ist anzumerken, daß die Figuren 1 und 2 lediglich schematisch sind, wobei auf eine Darstellung der dem Fachmann ohnehin geläufigen elektrischen Verdrahtung aus Übersichtlichkeitsgründen bewußt verzichtet wird.

Ein Lampenträger 5 mit einer Hauptlampe 7 und einer Reservelampe 9 ist in dem geschnitten dargestellten Gehäuse 11 der Beleuchtungsanordnung 1 untergebracht.

Dieser Lampenträger 5 ist um eine orthogonal zur Zeichenebene von Figur 1 verlaufende Drehachse 13 aus seiner Grundstellung gemäß Figur 1 in seine Reservestellung gemäß Figur 2 verschwenkbar. Dabei ist in der Grundstellung die Hauptlampe 7 beleuchtungsaktiv, d.h. die Hauptlampe 7 liegt in dieser Grundstellung in einer Beleuchtungslicht in den Lichtleiter 3 einkoppelnden Lage. In der in Figur 2 dargestellten Reservestellung hingegen liefert die Reservelampe 9 das Beleuchtungslicht.

Bei Ausfall der Hauptlampe 7 wird der Lampenträger 5 durch einen Stellungswechselmechanismus, welcher als Steuerungselement einen Steuerungsschieber 19 umfaßt, selbsttätig aus der Grundstellung nach Figur 1 in die Reservestellung nach Figur 2 geschwenkt.

Dieser Stellungswechselmechanismus umfaßt ferner einen Elektromagneten 15, der den Steuerungsschieber 19 in Richtung des Pfeils 17 verschieben kann. An den Steuerungsschieber 19 ist in seiner in Figur 1 dargestellten Verriegelungsstellung und in der Grundstellung des Lampenträgers 5 ein auf dem relativ zum Steuerungsschieber 19 verschwenkbaren Lampenträger 5 ausgebildeter Anschlag 21 mittels einer Drehfeder 23 gedrängt. Diese Drehfeder 23 ist auf dem Lampenträger 5 angeordnet und stützt sich zwischen einem auf dem Lampenträger 5 ausgebildeten Anschlag 25 und einem relativ zum Lampenträger 5 unverschwenkbaren Anschlag 27 ab.

In der Grundstellung wird der Lampenträger 5 durch die auf der Wirkung der Drehfeder 23 beruhende Selbsthemmung zwischen dem Steuerungsschieber 19, dem Anschlag 21 und Linearführungen 28 des Steuerungsschiebers 19 gehalten. Die Lage des Lampenträgers 5 in seiner Grundstellung und damit die Relativlage zwischen Hauptlampe 7 und Lichtleiter 3 ist also durch den Stellungswechselmechanismus selbst definiert und reproduzierbar festgelegt.

Falls bei Ausfall der Hauptlampe 7 der Magnet 15 erregt wird und deshalb der Steuerungsschieber 19 gegen die Federkraft einer sich zwischen dem Magneten 15 und dem Steuerungsschieber 19 abstützenden Druckfeder 29 in Richtung des Pfeils 17 gezogen wird, liegt der Anschlag 21 nicht mehr an dem Steuerungsschieber 19 an, wodurch die Drehfeder 23 den Lampenträger 5 um die Schwenkachse 13 in die Reservestellung gemäß Figur 2 verschwenken kann.

Bei nicht erregtem Magnet 15 wird der Steuerungsschieber 19 durch die Druckfeder 29 entgegengesetzt zur Richtung des Pfeils 17 in seine in den Figuren 1 und 2 gezeigte Verriegelungsstellung zurückgestellt. Ferner gewährleistet die Druckfeder 29, daß der Steuerungsschieber 19 in die Verriegelungsstellung rückgestellt wird, nachdem der Anschlag 21 während des Zurückschwenkens des Lampenträgers 5 in die Grundstellung den Steuerungsschieber 19 in Richtung des Pfeils 17 verschoben hat.

Der Lampenträger 5 und der den Magneten 15 und den Steuerungsschieber 19 umfassende Stellungswechselmechanismus sind auf einem Beleuchtungseinschub 31 angeordnet, welcher an Führungsschienen (in den Figuren 1 und 2 nicht zu sehen) des Gehäuses 11 geführt ist und zum Auswechseln ggf. defekter Lampen aus dem Gehäuse 11 der Beleuchtungsanordnung 1 herausziehbar ist. Dabei ist mit 33 eine in der eingeschobenen Stellung des Beleuchtungseinschubs 31 und in der Grundstellung des Lampenträgers 5 mit dem Gehäuse 11 der Beleuchtungsanordnung 1 fluchtende Wandung bezeichnet. An die Wandung 33 schließt das eigentliche, den Stellungswechselmechanismus tragende Einschubchassis 35 an, an welchem der Lampenträger 5 um die Drehachse 13 verschwenkbar angelenkt ist.

Beim Einschieben in das Gehäuse 11 rastet ein am Gehäuse 11 angelenkter und in die in den Figuren 1 und 2 gezeigte Stellung federvorgespannter Rasthebel 39 in eine Rastausnehmung 37 des Beleuchtungseinschubs 31 ein. Dabei wird die Rastausnehmung 37 durch eine sich zwischen einem Widerlager 40 des Beleuchtungsanordnungsgehäuses 11 und dem Einschubchassis 35 abstützende Druckfeder 41 gegen den Rasthebel 39 gedrängt. Die Rastausnehmung 37 und der Rasthebel 39 sowie das Widerlager 40 und die Druckfeder 41 bilden also einen Einschubrastmechanismus, der den Beleuchtungseinschub 31 im Beleuchtungsanordnungsgehäuse 11 in einer definierten Lage hält.

Zur Entnahme des Beleuchtungseinschubs 31 aus der Beleuchtungsanordnung 1 wird der Rasthebel 39 gegen seine Federvorspannung gedreht und damit aus seiner in der Rastausnehmung 37 liegenden Raststellung der Figuren 1 und 2 entfernt, wodurch der Beleuchtungseinschub 31 durch die Feder 41 zumindest soweit aus der Beleuchtungsanordnung 1 geschoben wird, daß er dann manuell und auf einfache Weise ohne Hilfswerkzeug vollständig herausziehbar ist.

Um auch bei einem Versagen des den Magneten 15 umfassenden selbsttätigen Stellungswechselmechanismus die Reservelampe 9 zum Einsatz bringen zu können, ist ein als Entriegelungsstange ausgebildetes Entriegelungselement 47 vorgesehen. Die über einen Druckknopf 45 manuell betätigbare Entriegelungsstange 47 wirkt mit einem um eine zur Zeichenebene von Figur 1 orthogonale Drehachse 49 drehbaren Zweiarmhebel 51 zusammen, welcher bei einer Drehung im Uhrzeigersinn den Steuerungsschieber 19 über einen auf dem Steuerungsschieber 19 ausgebildeten Anschlag 53 in Richtung des Pfeils 17 verschieben kann. Eine entsprechende Drehung des Doppelarmhebels 51 wird durch Drücken des Druckknopfs 45 bewirkt. Dabei wird die Entriegelungsstange 47, welche normalerweise durch eine sich zwischen einem mit dem Einschubchassis 35 fest verbundenen Anschlag 57 und dem Druckknopf 45 abstützende Druckfeder 55 in Abstand zum Doppelarmhebel 51 gehalten wird, entgegengesetzt zur Richtung des Pfeils 17 derart verschoben, daß sie den Doppelarmhebel 51 über seinen steuerungsschieberfernen Hebelarm in Uhrzeigerrichtung um die Drehachse 49 dreht.

An dem zur Aufnahme des Lichtleiters 3 vorgesehenen Abschnitt des Beleuchtungsanordnungsgehäuses 11 ist eine federvorgespannte Rastkugel 59 vorgesehen, welche durch eine in einem Sackloch des Gehäuses 11 aufgenommene Feder 61 in Richtung auf die optische Achse 63 der Lampen-Lichtleiteranordnung gedrängt wird. Diese Kugel 59 rastet in eine entsprechende Ringnut 65 am Lichtleiterende ein, wodurch eine definierte Lagebeziehung zwischen Lampe und Lichtleiter 3 in stets reproduzierbarer Weise hergestellt werden kann.

Figur 2 zeigt in einer Figur 1 entsprechenden Ansicht die Beleuchtungsanordnung mit in die Reservestellung verschwenktem Lampenträger 5.

Eine an der Oberseite des Gehäuses 11 angeordnete Blattfeder 67 dämpft die Schwenkbewegung des Lampenträgers 5 in seine Reservestellung und drängt den Lampenträger 5 gegen die Vorspannung der Drehfeder 23. Durch die Blattfeder 67 wird eine Kante 69 einer im Lampenträger 5 ausgebildeten Ausnehmung auf Anschlag an einen Vorsprung 73 gedrängt, welcher an einer am Gehäuse 11 angeordneten Blattfeder 71 ausgebildet ist und orthogonal zur Zeichenebene von Figur 2 vorsteht. Die auch in Figur 1 zu erkennende Blattfeder 71 ist orthogonal zur Zeichenebene der Figuren 1 und 2 in Richtung auf den Lampenträger 5 vorgespannt, wodurch der Vorsprung 73 in den die Kante 69 aufweisenden Ausschnitt eingreift, wenn der Lampenträger 5 aus seiner Grundstellung in seine Reservestellung verschwenkt wird. Dadurch ist auch die Reservestellung des Lampenträgers 5 präzise festgelegt und damit eine definierte Lagebeziehung zwischen der Ersatzlampe 9 und dem Lichtleiter 3 gewährleistet.

In Figur 2 ist zu erkennen, daß ein als Anzeigeelement ausgebildeter Abschnitt 75 des verschwenkbaren Lampenträgers 5 in der Reservestellung des Lampenträgers 5 aus der mit dem Gehäuse 11 fluchtenden Einschubwandung 33 hinausragt und dadurch anzeigt, daß die Reservelampe 9 beleuchtungsaktiv ist. Durch den Anzeigeabschnitt 75 wird also eine zuverlässige Anzeige eines Betriebs der Ersatzlampe 9 gewährleistet, welche im Vergleich zu bekannten elektrischen Anzeigevorrichtung relativ fehlerunempfindlich ist.

Ein durch die Verschwenkung des Lampenträgers 5 aus der Grundstellung in seine Reservestellung schaltender Schalter 77 schaltet die Energieversorgung auf die Reservelampe 9 um, wenn der Lampenträger 5 in seine Reservestellung geschwenkt wird.

Desweiteren ist in Figur 2 ein am Gehäuse 11 der Beleuchtungsanordnung 1 angeordneter Rückstellvorsprung 79 zu erkennen, welcher den Lampenträger 5 in seine Grundstellung zurückdrängt, wenn der Beleuchtungseinschub 31 in Richtung des Pfeils 81 aus der Beleuchtungsanordnung 1 herausgezogen wird.

## Patentansprüche

1. Beleuchtungseinrichtung (1)
- mit einem Beleuchtungsanordnungsgehäuse (11); und
- mit einer Hauptlampe (7) und einer Reservelampe (9), welche auf einem zwischen einer Grundstellung mit beleuchtungsaktiver Hauptlampe (7) und einer Reservestellung mit beleuchtungsaktiver Reservelampe (9) bewegbaren Lampenträger (5) angeordnet sind; wobei
- der Lampenträger (5) aus der Grundstellung in die Reservestellung schwenkbar ist; und wobei
- ein Stellungswechselmechanismus (15, 19, 21) vorgesehen ist, der bei Ausfall der Hauptlampe (7) den Lampenträger (5) selbsttätig aus der Grundstellung in die Reservestellung bewegt;
**dadurch gekennzeichnet, dass**
- ein Beleuchtungseinschub (31) vorgesehen ist;
- auf dem der Lampenträger (5) und der Stellungswechselmechanismus (15, 19, 21) angeordnet sind; wobei
- der Beleuchtungseinschub (31) in dem Beleuchtungsanordnungsgehäuse (11) derart angeordnet ist, dass er in das Beleuchtungsanordnungsgehäuse (11) eingefahren werden kann und aus dem Beleuchtungsanordnungsgehäuse ausgefahren werden kann.

2. Beleuchtungseinrichtung (1) nach Anspruch 1, **dadurch gekennzeichnet, daß** die Lage des Lampenträgers (5) in seiner Grundstellung durch den Stellungswechselmechanismus (15, 19, 21, 23, 25, 27) festgelegt ist.

3. Beleuchtungseinrichtung (1) nach Anspruch 1 oder 2, **dadurch gekennzeichnet, daß** die Lage des Lampenträgers (5) in seiner Reservestellung durch einen Reservestellungs-Rastmechanismus (67, 69, 71, 73) festgelegt ist.

4. Beleuchtungseinrichtung (1) nach einem der Ansprüche 1 bis 3, **dadurch gekennzeichnet, daß** der Beleuchtungseinschub (31) im Beleuchtungsanordnungsgehäuse (11) durch einen Einschubrastmechanismus (37, 39, 40, 41) festgelegt ist.

5. Beleuchtungseinrichtung (1) nach einem der Ansprüche 1 bis 4, **dadurch gekennzeichnet, daß** ein Rückstellelement (79) beim Ausfahren des Beleuchtungseinschubs (31) aus der Beleuchtungsanordnung (1) den Lampenträger (5) aus seiner Reservestellung in seine Grundstellung rückstellt.

6. Beleuchtungseinrichtung (1) nach einem der Ansprüche 1 bis 5, **dadurch gekennzeichnet, daß** der Lampenträger (5) ein in der Reservestellung aus dem Beleuchtungsanordnungsgehäuse (11) ausgeschwenktes, den Betrieb der Reservelampe (9) anzeigendes Anzeigeelement (75) aufweist.

7. Beleuchtungseinrichtung (1) nach einem der Ansprüche 1 bis 6, **dadurch gekennzeichnet, daß** der Stellungswechselmechanismus (15, 19, 21, 23, 25, 27) ein magnetisch stellbares Steuerungselement (19) umfaßt, welches eine den Lampenträger (5) in seine Reservestellung drängende Feder (23) steuert.

8. Beleuchtungseinrichtung (1) nach Anspruch 7, **dadurch gekennzeichnet, daß** das Steuerungselement (19) über ein Entriegelungselement (47) auch manuell betätigbar ist.

9. Beleuchtungseinrichtung (1) nach einem der Ansprüche 1 bis 8, **dadurch gekennzeichnet, daß** an der Beleuchtungsanordnung (1) ein Lichtleiter (3) ankoppelbar ist, welcher das Licht der beleuchtungsaktiven Lampe (7 bzw. 9) zu einer von der Beleuchtungsanordnung (1) entfernten Stelle transportiert.

10. Beleuchtungseinrichtung (1) nach Anspruch 9, **dadurch gekennzeichnet, daß** der Lichtleiter (3) an der Beleuchtungsanordnung (1) einrastend ankoppelbar ist, um eine feste, vorgegebene Lagebeziehung zwischen einer Endfläche des Lichtleiters (3) und der beleuchtungsaktiven Lampe (7 bzw. 9) herzustellen.

## Claims

1. Lighting device (1)
- having a lighting arrangement housing (11); and
- having a main lamp (7) and a reserve lamp (9) which are arranged on a lamp mount (5) which can be moved between a basic position having a lit main lamp (7) and a reserve position having a lit reserve lamp (9);
- it being possible for the lamp mount (5) to be pivoted out of the basic position into the reserve position; and
- a position-changing mechanism (15, 19, 21) being provided which, in the event of the main lamp (7) failing, moves the lamp mount (5) automatically out of the basic position into the reserve position;
**characterized in that**
- a lighting insert (31) is provided;
- on which the lamp mount (5) and the position-changing mechanism (15, 19, 21) are arranged;
- the lighting insert (31) being arranged in the lighting arrangement housing (11) such that it can be moved into the lighting arrangement housing (11) and can be moved out of the lighting arrangement housing.

2. Lighting device (1) according to Claim 1, **characterized in that** the position of the lamp mount (5) is fixed in its basic position by the position-changing mechanism (15, 19, 21, 23, 25, 27).

3. Lighting device (1) according to Claim 1 or 2, **characterized in that** the position of the lamp mount (5) is fixed in its reserve position by a reserve-position latching mechanism (67, 69, 71, 73).

4. Lighting device (1) according to one of Claims 1 to 3, **characterized in that** the lighting insert (31) is fixed in the lighting arrangement housing (11) by means of an insert latching mechanism (37, 39, 40, 41).

5. Lighting device (1) according to one of Claims 1 to 4, **characterized in that** a resetting element (79) resets the lamp mount (5) from its reserve position to its basic position when the lighting insert (31) is moved out of the lighting arrangement (1).

6. Lighting device (1) according to one of Claims 1 to 5, **characterized in that** the lamp mount (5) has a display element (75) which is pivoted out of the lighting arrangement housing (11) into the reserve position and which indicates the operation of the reserve lamp (9).

7. Lighting device (1) according to one of Claims 1 to 6, **characterized in that** the position-changing mechanism (15, 19, 21, 23, 25, 27) comprises a magnetically adjustable control element (19) which controls a spring (23) which forces the lamp mount (5) into its reserve position.

8. Lighting device (1) according to Claim 7, **characterized in that** the control element (19) may also be actuated manually by means of a release element (47).

9. Lighting device (1) according to one of Claims 1 to 8, **characterized in that** an optical waveguide (3) can be coupled to the lighting arrangement (1) and transports the light from the lit lamp (7 or 9) to a point remote from the lighting arrangement (1).

10. Lighting device (1) according to Claim 9, **characterized in that** the optical waveguide (3) can be coupled to the lighting arrangement (1) such that it latches in so as to produce a fixed, predetermined positional relationship between an end face of the optical waveguide (3) and the lit lamp (7 or 9).

## Revendications

1. Système d'éclairage (1)
- avec un boîtier pour un agencement d'éclairage (11) ; et
- avec une lampe principale (7) et une lampe de réserve (9) qui est disposée sur un support de lampe (5), susceptible d'être déplacé entre une position initiale avec une lampe principale (7) active en éclairage et une position de réserve avec une lampe de réserve (9) active en éclairage,
- le support de lampe (5) pouvant être pivoté d'une position initiale dans la position de réserve et
- un mécanisme de changement de position (15, 19, 21) qui en cas de panne de la lampe principale (7) déplace automatiquement le support de lampe (5) de la position initiale dans la position de réserve étant prévu ;
**caractérisé en ce que**
- un insert d'éclairage (31) est prévu ;
- sur lequel sont disposés le support de lampe (5) et le mécanisme de changement de position (15, 19, 21) ;
- l'insert d'éclairage (31) étant disposé dans le boîtier pour l'agencement d'éclairage (11) de façon à ce qu'il puisse être inséré dans le boîtier pour l'agencement d'éclairage (11) et extrait du boîtier pour l'agencement d'éclairage.

2. Système d'éclairage (1) selon la revendication 1, **caractérisé en ce que** la position du support de lampe (5) dans sa position initiale est fixée par le mécanisme de changement de position (15, 19, 21, 23, 25, 27).

3. Système d'éclairage (1) selon la revendication 1 ou 2, **caractérisé en ce que** la position du support de lampe (5) dans sa position de réserve est fixée par une mécanisme d'encliquetage en position de réserve (67, 69, 71, 73).

4. Système d'éclairage (1) selon l'une quelconque des revendications 1 à 3, **caractérisé en ce que** l'insert d'éclairage (31) est fixé dans le boîtier pour l'agencement de système d'éclairage (11) par un mécanisme d'encliquetage d'insert (37, 39, 40, 41).

5. Système d'éclairage (1) selon l'une quelconque des revendications 1 à 4, **caractérisé en ce que** lors de la sortie de l'insert d'éclairage (31) hors de l'agencement d'éclairage (1), un élément de rappel (79) rappelle le support de lampe (5) de sa position de réserve dans sa position initiale.

6. Système d'éclairage (1) selon l'une quelconque des revendications 1 à 5, **caractérisé en ce que** le support de lampe (5) est doté d'un élément d'affichage (75) qui dans la position de réserve est pivoté hors du boîtier de l'agencement de système d'éclairage (11) et qui affiche le fonctionnement de la lampe de réserve (9).

7. Système d'éclairage (1) selon l'une quelconque des revendications 1 à 6, **caractérisé en ce que** le mécanisme de changement de position (15, 19, 21, 23, 25, 27) comporte un élément de commande (19) réglable magnétiquement, qui commande un ressort (23) qui pousse le support de lampe (5) dans sa position de réserve.

8. Système d'éclairage (1) selon la revendication 7, **caractérisé en ce que** l'élément de commande (19) est également activable manuellement, par l'intermédiaire d'un élément de déverrouillage (47).

9. Système d'éclairage (1) selon l'une quelconque des revendications 1 à 8, **caractérisé en ce qu'**une fibre optique (3) qui transporte la lumière de la lampe (7, resp. 9) active en éclairage vers un endroit éloigné de l'agencement d'éclairage (1) peut être accouplée sur l'agencement d'éclairage (1).

10. Système d'éclairage (1) selon la revendication 9, **caractérisé en ce que** la fibre optique (3) peut être accouplée par encliquetage sur l'agencement d'éclairage (1), pour créer une relation de position fixe prédéfinie entre une surface d'extrémité de la fibre optique (3) et la lampe active en éclairage (7, resp. 9).
